# EUROPÄISCHE PATENTSCHRIFT

(11) **EP 2 592 584 B1**
(45) Veröffentlichungstag und Bekanntmachung des Hinweises auf die Patenterteilung: **25.06.2014**
(21) Anmeldenummer: 12007223.6
(22) Anmeldetag: 17.10.2012
(51) Int. Cl.: G06K 17/00, G06K 19/073

(54) **Sichere Drahtlos-Transaktion**
Secure wireless transaction
Transaction sans fil sécurisée

(30) Priorität: 11.11.2011 DE 102011118374
(43) Veröffentlichungstag der Anmeldung: 15.05.2013
(73) Patentinhaber: Giesecke & Devrient GmbH, 81677 München (DE)
(72) Erfinder: Grosser, Caroline, 85646 Anzing (DE)

(56) Entgegenhaltungen:
- EP-A1- 2 031 548
- EP-A1- 2 219 140
- CZESKIS ALEXEI ET AL: "RFIDs and secret handshakes: defending against ghost-and-leech attacks and unauthorized reads with context-aware communications", PROCEEDINGS OF THE 15TH ACM CONFERENCE ON COMPUTER AND COMMUNICATIONS SECURITY : ALEXANDRIA, VIRGINIA, USA, OCTOBER 27 - 31, 2008, ACM, NEW YORK, NY, 27. Oktober 2008 (2008-10-27), Seiten 479-490, XP002597239, ISBN: 978-1-59593-810-7 [gefunden am 2008-10-01]

## Beschreibung

Die vorliegende Erfindung betrifft ein Verfahren zum Absichern einer von einem portablen Datenträger auf einem Transaktionsendgerät mittels Drahtlos-Kommunikation eingeleiteten Transaktion sowie einen derartigen portablen Datenträger, ein Transaktionsendgerät und ein Transaktionssystem.

Mit Hilfe der drahtlosen Datenkommunikation können Transaktionen zwischen einem portablen Datenträger und einem Transaktionsendgerät komfortabel durchgeführt werden, indem der Benutzer des Datenträgers in ein von dem Transaktionsendgerät erzeugtes Drahtlos-Kommunikationsfeld eintritt und dort eine Transaktion mittels Drahtlos-Kommunikation gegenüber dem Transaktionsendgerät einleitet. Beispielsweise erzeugt bei der antennenbasierten RFID-Technologie ("Radio-Frequency Identification") ein RFID-Lesegerät (als Transaktionsendgerät) ein elektromagnetisches Feld geringer Reichweite zur Durchführung einer Transaktion mit einem RFID-Transponder (als portabler Datenträger). Die Betriebsenergie erhält der RFID-Transponder hierbei zumeist über das Kommunikationsfeld.

In dieser Weise können vielfältige Anwendungen realisiert werden, wie z.B. die Identifizierung von Waren und Warenmerkmalen, z.B. von Fahrzeugen oder Wertdokumenten, oder die Identifizierung von Personen im Rahmen von Zugangskontrollsystemen oder dergleichen. Ebenso sind Fahrzeugschlüsselsysteme basierend auf der RFID-Technologie bekannt, die einen schlüssellosen Zugang zu oder den Betrieb des Kraftfahrzeuges ermöglichen.

Die technisch vorgegebene eingeschränkte Reichweite eines RFID-Lesegeräts wird hierbei als Sicherheitsmerkmal angesehen, welches beim Einleiten und Ausführen einer Transaktion die Präsenz des Datenträgers in unmittelbarer Nähe des Transaktionsendgeräts erfordert. Mittels eines sogenannten Relay-Angriffs kann ein Angreifer die Reichweite des RFID-Lesegeräts jedoch durch Verwendung von Relay-Stationen mit Antennen unbemerkt erhöhen, z.B. indem sich je eine Relay-Station in der Nähe des portablen Datenträgers und des Transaktionsendgerätes befindet, um vorzutäuschen, dass sich der Datenträger innerhalb des von dem Transaktionsendgerät bereitgestellten Kommunikationsfeldes befindet, obwohl dies gar nicht der Fall ist. Dadurch können von dem Benutzer des Datenträgers unbemerkt Transaktionen zugunsten des Angreifers eingeleitet werden.

Eine bekannte Gegenmaßnahme ist die Analyse der Signallaufzeiten im Rahmen der erforderlichen Drahtlos-Kommunikation, welche bei Relay-Angriffen wesentlich länger als üblich sind. Von diesem Ansatz ausgehend schlägt die GB 2462648 A ein Authentisierungssystem vor, welches die Zeitcharakteristik einer kryptographischen Authentisierung zwischen Datenträger und Transaktionsendgerät auswertet. Auch die GB 2471163 A schlägt die Auswertung von Signaleigenschaften der Drahtlos-Kommunikation vor, nämlich der Amplituden von Antwortsignale. Derartige Ansätze basieren jedoch auf technisch komplexen Laufzeit- bzw. Signalanalysen.

Demzufolge ist es die Aufgabe der vorliegenden Erfindung, eine technisch einfache und kostengünstige Möglichkeit vorzuschlagen, mit welcher Relay-Angriffe erkannt und vermieden werden können.

Diese Aufgabe wird durch ein Verfahren, einen portablen Datenträger, ein Transaktionsendgerät sowie ein Transaktionssystem mit den Merkmalen der unabhängigen Patentansprüche gelöst. In den davon abhängigen Ansprüchen sind vorteilhafte Ausgestaltungen und Weiterbildungen der Erfindung angegeben.

Erfindungsgemäß werden von einem portablen Datenträger, der sich innerhalb eines Drahtlos-Kommunikationsfeldes eines Transaktionsendgeräts befindet, Positionsdaten aufgezeichnet, welche Positionen und Positionsveränderungen des Datenträgers in dem Kommunikationsfeld wiedergeben, insbesondere Bewegungsdaten und Bewegungsrichtungsdaten, welche eine Rekonstruktion eines Bewegungspfades des Datenträgers in dem Kommunikationsfeld ermöglichen. Eine von dem Datenträger auf dem Transaktionsendgerät eingeleitete Transaktion wird von dem Transaktionsendgerät nur dann ausgeführt, wenn eine Auswertung der erfassten Positionsdaten durch das Transaktionsendgerät ergibt, dass sich der Datenträger in einem Nahbereich des Drahtlos-Kommunikationsfeldes befindet. Zu diesem Zweck wird das Kommunikationsfeld in einen Nahbereich um das Transaktionsendgerät herum und einen sich daran nach Außen anschließenden Fernbereich unterteilt, z.B. abhängig von einer Sendecharakteristik des Transaktionsendgeräts und/oder einer Empfangscharakteristik des Datenträgers.

Durch Auswertung von Positionsdaten kann das Transaktionsendgerät schnell und zuverlässig erkennen, ob ein Relay-Angriff vorliegt, oder ob sich der betreffende Datenträger tatsächlich in einem Bereich des Drahtlos-Kommunikationsfeldes befindet, in dem ein Benutzer des Datenträgers realistischerweise steht, wenn er mit seinem portablen Datenträger eine Transaktion auf dem Transaktionsendgerät veranlasst. Dazu ist lediglich die Erfassung der Positionsdaten mit technisch bekannten Mitteln nötig und eine einfache geometrische Auswertung, deren Komplexität und Ressourcenbedarf wesentlich geringer ist, als die der bekannten Signalanalyseverfahren.

Die von dem Datenträger aufgezeichneten Positionsdaten umfassen neben den Bewegungsdaten vorzugsweise auch Feldstärkedaten, welche die lokale Feldstärke des Kommunikationsfeldes jeweils an der aktuellen Position des Datenträgers umfassen. Die lokalen Feldstärkedaten werden basierend auf Zeitdaten mit den Bewegungsdaten verknüpft, die ebenfalls von dem Datenträger erfasst werden und die jeweils seit Einschalten oder Initialisieren des Datenträgers abgelaufenen Zeit angeben. Die Bewegungs- und Feldstärkedaten können somit von dem Transaktionsendgerät gemeinsam ausgewertet werden, um sicher festzustellen, ob sich der Datenträger im Nahbereich des Kommunikationsfeldes befindet.

Der Datenträger erkennt einen Übertritt von dem Fernbereich in den Nahbereich des Kommunikationsfelds daran, dass die aufgezeichneten Feldstärkedaten eine vorgegebene Grenzfeldstärke überschreiten. Diese Grenzfeldstärke ist vorzugsweise derart bemessen, dass die lokalen Feldstärken innerhalb des Nahbereichs ausreichend sind, um den Datenträger mit einer Betriebsenergie zu versorgen, die dessen Funktionalität vollständig gewährleistet. Demgegenüber sind die lokalen Feldstärkedaten im Fernbereich wenigstens für das Aufzeichnen der Positionsdaten durch den Datenträger ausreichend. Um die im Fernbereich angebotene Betriebsenergie möglichst vollständig zur Aufzeichnung der Positionsdaten nutzen zu können, verzichten das Transaktionsendgerät und der portable Datenträger außerhalb des Nahbereichs vorzugsweise auf jedwede Drahtlos-Kommunikation.

Ein Transaktionsendgerät umfasst neben den üblichen Komponenten, wie z.B. einem Prozessor, einem Speicher, einer Drahtlos-Kommunikationsschnittstelle, welche vorzugsweise als RFID-Lesegerät realisiert ist und das Drahtlos-Kommunikationsfeld erzeugt, sowie einer Transaktionseinrichtung zum Ausführen einer eingeleitete Transaktion, erfindungsgemäß auch eine Auswerteeinrichtung, die die Positionsdaten des Datenträgers über die Drahtlos-Kommunikationsschnittstelle empfängt und diese auswertet. Bei der Auswertung berücksichtigt die Auswerteeinrichtung sowohl die Bewegungsdaten als auch die lokalen Feldstärkedaten um einen Bewegungspfad des Datenträgers durch das Kommunikationsfeld zu rekonstruieren und diesem die Feldstärkedaten lokal zuordnen zu können.

Ein erfindungsgemäßer portabler Datenträger ist vorzugsweise eine mit einem RFID-Transponder ausgestattete Chipkarte, Smartcard, kartenförmige Zugangs-, Identifikations- oder Transaktionseinheit, SIM-Mobilfunk-, Speicher- oder Multimediakarte oder dergleichen. Der portable Datenträger kann auch als drahtlos operierender Kraftfahrzeugschlüssel ausgebildet sein.

Er umfasst die üblichen Komponenten, z.B. einen Prozessor, einen Speicher, einer Drahtlos-Kommunikationsschnittstelle zur Drahtlos-Kommunikation mit dem Transaktionsendgerät, z.B. in Form eines RFID-Transponders, sowie eine Steuereinrichtung zum Einleiten einer Transaktion auf einem Transaktionsendgerät. Erfindungsgemäß umfasst der Datenträger auch einen Bewegungssensor um die Positionsdaten bzw. Bewegungsdaten betreffend die Bewegungen des Datenträgers in dem Kommunikationsfeld aufzuzeichnen. Die Steuereinrichtung ist erfindungsgemäß eingerichtet, die Bewegungsdaten zusammen mit lokalen Feldstärkedaten, die über die Drahtlos-Kommunikationsschnittstelle des Datenträgers ermittelt werden, und Zeitdaten abzuspeichern und anhand der Feldstärkedaten festzustellen, ob sich der portable Datenträger in einem Nahbereich des Kommunikationsfeldes bewegt hat. Sobald die Steuereinrichtung das Eintreten in den Nahbereich erkennt, überträgt sie die zu Positionsdaten zusammengefassten Bewegungs-, Feldstärkeund Zeitdaten an das Transaktionsendgerät. Vorzugsweise unterbindet die Steuereinrichtung jedwede Drahtlos-Kommunikation mit dem Transaktionsendgerät, wenn der Datenträger sich noch nicht in den Nahbereich befindet.

Es gibt prinzipiell verschiedene und beliebig kombinierbare Varianten einer Prüfung, ob sich der portable Datenträger im Nahbereich des Kommunikationsfeldes befindet, so dass eine eingeleitete Transaktion ausgeführt werden kann. Hierbei wird die eingeleitete Transaktion vorzugsweise nur dann ausgeführt, wenn zumindest zwei Prüfungen gemäß den nachfolgend erläuterten beiden Ausführungsvarianten erfolgreich verlaufen sind.

Bei einer ersten bevorzugten Ausführungsvariante der vorliegenden Erfindung führt das Transaktionsendgerät die Transaktion nur dann aus, wenn dessen Auswerteeinrichtung feststellt, dass sich der Datenträger durch den Fernbereich des Kommunikationsfeldes hindurch in den Nahbereich bewegt hat. Dies wird anhand eines aus den Bewegungsdaten rekonstruierten Bewegungspfades des portablen Datenträgers durch das Kommunikationsfeld und der dem Bewegungspfad örtlich und zeitlich zugeordneten lokalen Feldstärkedaten ermittelt. Der Bewegungspfad des Datenträgers verläuft relativ zu dem Transaktionsendgerät. Vorzugsweise werden die Positionsdaten, die der Datenträger seit Eintreten in das Kommunikationsfeld (bzw. in dessen Fernbereich) aufgezeichnet hat, drahtlos an das Transaktionsendgerät übertragen, sobald der Datenträger anhand aufgezeichneter Feldstärkedaten erkennt, dass er den Fernbereich verlassen und den Nahbereich betreten hat.

Gemäß einer zweiten bevorzugten Ausführungsvariante wird ein Bewegungspfad ausgewertet, den der portable Datenträger in dem Nahbereich zurückgelegt hat. Dazu initialisiert die Steuereinrichtung des Datenträgers die Zeitdaten bei Eintreten in den Nahbereich des Kommunikationsfeldes, so dass die Zeiterfassung zur Ermittlung von Bewegungs- und Feldstärkedaten im Nahbereich wieder bei Null beginnt. Synchron hierzu initialisiert auch das Transaktionsendgerät einen eigenen Zeitzähler und zeichnet seinerseits über eine eigene Sensoreinrichtung, z.B. eine entsprechend ausgestattete und an dem Transaktionsendgerät angebrachte Kameraeinrichtung, Bewegungsdaten auf, aus denen sich auch ein Bewegungspfad rekonstruieren lässt, den der Datenträger in dem Nahbereich zurückgelegt hat.

Wenn der Datenträger einen ausreichend langen Bewegungspfad in dem Nahbereich zurückgelegt hat, z.B. indem sich dessen Benutzer zu dem Transaktionsendgerät bewegt hat und dort noch einige Schritte hin- und hergegangen ist, fordert das Transaktionsendgerät die Positionsdaten des Datenträgers an und vergleicht den aus den Positionsdaten des Datenträgers rekonstruierbaren Bewegungspfad mit demjenigen Bewegungspfad, der aus den von dem Transaktionsendgerät aufgezeichneten Bewegungsdaten rekonstruierbar ist. Die Transaktion wird nur dann ausgeführt, wenn die beiden rekonstruierten Bewegungspfade im Wesentlichen übereinstimmen.

Vorzugsweise überträgt der Datenträger bzw. dessen Steuereinrichtung die Positionsdaten in abgesicherter Weise an das Transaktionsendgerät, z.B. verschlüsselt (mit einem öffentlichen Schlüssel des Transaktionsendgeräts) und/oder signiert (mit einem geheimen Schlüssel des Datenträgers). Beispielsweise kann auch eine Authentisierung des Datenträgers erfolgen, indem dieser zusätzlich zu den Positionsdaten auch eine eindeutige Kennung des Datenträgers sowie eine Prüfsumme an das Transaktionsendgerät überträgt, in die die übertragenen Positionsdaten und die Kennung eingehen und die mittels eines datenträgerindividuellen geheimen Schlüssels verschlüsselt (bzw. signiert) wird. Die Transaktionseinrichtung kann dann die Authentizität des Datenträgers und damit die Echtheit der Positionsdaten prüfen, indem die verschlüsselte Prüfsumme entschlüsselt (z.B. symmetrisch mit dem geheimen Schlüssel oder asymmetrisch mit dem öffentlichen Schlüssel des Datenträgers) und die Übereinstimmung mit den im Klartext übertragenen Positionsdaten und der Kennung geprüft wird.

Vorzugsweise werden die Positionsdaten in einem flüchtigen Speicher des Datenträgers gespeichert, beispielsweise einem RAM-Arbeitsspeicher, da dies gegenüber dem Speichern in einem nicht-flüchtigen Speicher besonders energiesparend ist. Dies ist besonders vorteilhaft, solange sich der Datenträger noch im Fernbereich des Kommunikationsfeldes befindet.

Weitere Merkmale und Vorteile der Erfindung ergeben sich aus der folgenden Beschreibung von erfindungsgemäßen Ausführungsbeispielen sowie weiteren Ausführungsalternativen im Zusammenhang mit den Zeichnungen, die zeigen:
- Figur 1: einen portablen Datenträger gemäß der vorliegenden Erfindung;
- Figur 2: ein Transaktionsendgerät gemäß der vorliegenden Erfindung; und
- Figur 3: einen erfindungsgemäßen Verfahrensablauf unter Beteiligung des Datenträgers gemäß Figur 1 und des Transaktionsendgeräts gemäß Figur 2.

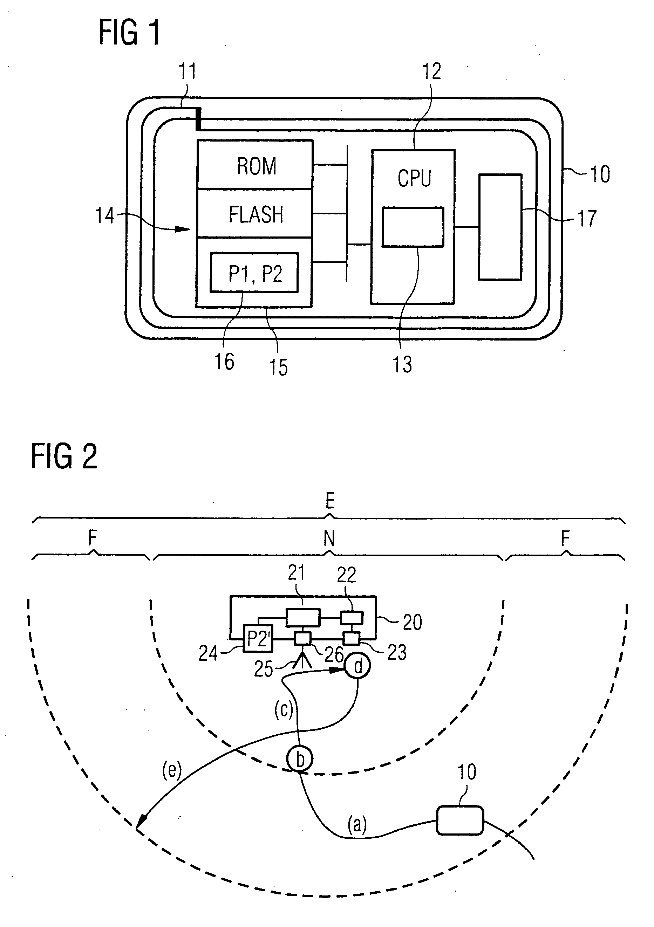

Figur 2 zeigt ein als Verkaufsautomat ausgestaltetes Transaktionsendgerät bzw. Transaktionsterminal 20. Das Terminal 20 erzeugt über eine RFID-Einheit 26 und eine Drahtlos-Schnittstelle in Form einer Antenne 25 ein elektromagnetisches Feld E mit einer Reichweite zwischen einigen Zentimetern und wenigen Metern. Die von dem Verkaufsterminal 20 angebotenen Waren oder Dienstleistungen können z.B. Süßwaren, Zeitungen, Eintrittskarten oder elektronische Waren in Datenform umfassen, oder Dienstleistungen als Schuhputzmaschine, Bankautomat, Informationsterminal oder dergleichen.

Derartige Waren und Dienstleistungen können von einem portablen Datenträger gemäß Fig.1, der als chipkartenförmiger RFID-Transponder bzw. RFID-Token 10 ausgestaltet ist, im Rahmen einer Transaktion abgerufen werden. Der Transponder 10 ist dazu mit einer Drahtlos-Schnittstelle in Form einer Antenne 11 ausgestattet, über die er in dem Feld E über kapazitive oder induktive Kopplung eine Drahtlos-Kommunikation gemäß einem geeigneten Protokoll durchführen und die gewünschte Transaktion auf dem Terminal 20 veranlassen kann. Der Chipkarten-Transponder 10 ist hierbei passiv, so dass er seine Betriebsenergie aus dem Feld E bezieht. Abweichenden kann jedoch auch ein aktiver Transponder mit eigener Energiequelle verwendet werden.

Der Transponder 10 und das Terminal 20 sind derart ausgestattet und eingerichtet, dass ein Relay-Angriff verhindert wird, bei dem die technisch bedingte geringe Reichweite des Felde E durch zusätzliche Antennen vergrößert wird, um unbemerkt von einem Benutzer des Transponders 10 unautorisierte Transaktionen vorzunehmen. Hierzu umfasst der Transponder 10 neben den üblichen Komponenten einer Chipkarte, einschließlich eines Prozessors 12 (CPU) und einer Speicheranordnung 14 mit einem flüchtigen RAM-Speicher 15, insbesondere einen Bewegungssensor 17 und eine Steuereinrichtung 13, welche im Ausführungsbeispiel gemäß Fig. 1 als von dem Prozessor 12 ausführbare Softwareapplikation ausgestaltet ist. Allerdings sind auch andere Bauformen der Steuereinrichtung möglich, z.B. als Co-Prozessor oder anderweitig separate Komponente.

Das Terminal 20 umfasst neben der Antenne 25 ein Tastenfeld 23 als Eingabeeinrichtung, über die der Benutzer des Transponders 10 die gewünschte Transaktion spezifizieren kann, sowie eine Transaktionseinrichtung 22, die die gewählte Transaktion schließlich umsetzt. Daneben umfasst das Terminal 20 auch eine Sensoreinrichtung 24, beispielsweise eine Kamera, Ultraschall- oder Infraroteinrichtung oder dergleichen, die die Bewegung des Transponders 20 aufzeichnet.

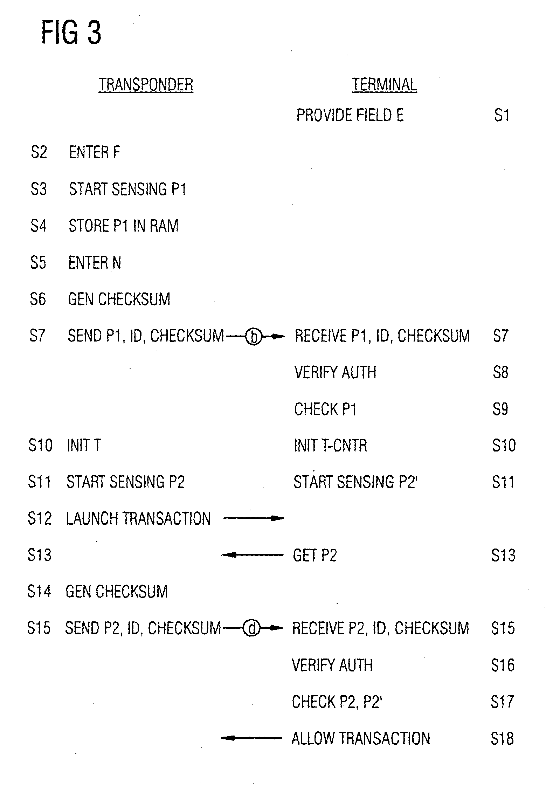

Eine Auswerteeinrichtung 21 des Terminals 20 prüft, ob bei einem Transponder 10, der in das Feld E eingetreten ist, ein Relay-Angriff vorliegt. Zu diesem Zweck wertet die Auswerteeinrichtung 21 Bewegungs- und Bewegungsrichtungsdaten aus, die der Bewegungssensor 17 des Transponders 10 und/ oder die Sensoreinrichtung 24 der Terminals 20 aufgezeichnet haben und die eine Bewegungsbahn des Transponders 10 innerhalb des Feldes E wiedergeben. Die Ausführung einer Transaktion wird dann abhängig vom Ergebnis der Auswertung gestattet oder zurückgewiesen. Im Zusammenhang mit Fig. 3 werden nachfolgend die zur Abwehr eines Relay-Angriffs notwendigen Schritte beschrieben.

In einem Schritt S1 erzeugt das Terminal 20 über seine RFID-Einheit 26 und die Antenne 25 das elektromagnetische Feld E (PROVIDE FIELD E), beispielsweise als magnetisches Wechselfeld geringer Reichweite. Das Feld E wird unterteilt in einen Nahbereich N unmittelbar um das Terminal 20 herum und einen sich daran anschließenden Fernbereich F, dessen Begrenzung nach außen durch die Reichweite der Antenne 25 und Signaleigenschaften des Feldes E bestimmt wird. Der Transponder 10 erhält also nur dann eine wenigstens minimale Betriebsenergie, wenn der Benutzer des Transponders 10 mit diesem den Fernbereich F in Schritt S2 betritt (ENTER F).

In Fig. 2 ist der Bewegungspfad des Transponders 10 (und des Benutzers) durch den Fernbereich F mit (a) und durch den Nahbereich N mit (c) bezeichnet. An den Positionen (b) und (d) finden jeweils Auswertungen durch die Auswertungseinrichtung 21 des Terminals 20 statt. Über den Pfad (e) verlässt der Benutzer mit dem Transponder 10 das Feld E schließlich wieder.

In dem Fernbereich F ist die dem Transponder 10 bereitgestellte Betriebsenergie wenigstens so groß, dass der Betrieb des Bewegungssensors 17 und die zugehörige Datenverarbeitung möglich ist. Um diese Betriebsenergie möglicht vollständig für den Bewegungssensor 17 nutzen zu können, findet in dem Fernbereich F keinerlei drahtlose Kommunikation zwischen dem Transponder 10 und dem Terminal 20 statt. Sobald der Benutzer mit dem Transponder 10 das Feld E betritt, zeichnet der Bewegungssensor 17 kontinuierlich oder in regelmäßigen Zeitabständen Positionsdaten 16 (P1) auf, die die Position bzw. Bewegung und Bewegungsrichtung des Transponders 10 innerhalb des Fernbereichs F wiedergeben (START SENSING P1), und legt diese in Schritt S4 in dem flüchtigen RAM-Speicher 15 des Transponders 10 ab (STORE P1 IN RAM).

Als Datenstruktur kann eine Liste oder Tabelle verwendet werden, in der zu jedem Messzeitpunkt ein Positionsdatensatz [<T>; <B>; <S>] hinterlegt wird. Hierbei umfasst <T> Zeitdaten, die die seit dem Einschalten/Initialisieren des Transponders 10 bzw. dessen Eintritt in das Feld E vergangene Zeit wiedergeben, während <B> die zu diesen Zeitpunkten aufgezeichneten Bewegungs- bzw. Bewegungsrichtungsdaten angibt, eventuell ergänzt durch Angaben zur Bewegungsintensität, wie z.B. Geschwindigkeiten oder Beschleunigungen. Unter <S> wird schließlich die lokale Feldstärke des Feldes E an dem betreffenden Messort hinterlegt. Aus den Daten <T>, <B> und <S> können die Positionen des Transponders 10 und die zugehörige lokale Feldstärke in dem Feld E zu beliebigen Zeitpunkten ermittelt werden. Die Bewegungspfade (a) und (c) sind somit vollständig rekonstruierbar.

Abhängig von der Länge der Bewegungspfade (a) und (c) und von der Abtastrate des Bewegungssensors 17 können umfangreiche Positionsdaten 16 anfallen, die in dem flüchtigen Speicher 15 abgelegt werden müssen. Um den Speicherplatz des RAM-Speichers 15 zu schonen und die spätere Auswertung der Positionsdaten 16 durch die Auswerteeinrichtung 21 zu vereinfachen, kann die Steuereinrichtung 13 des Transponders 10 die erfassten Positionsdaten 16 vor dem Abspeichern filtern oder nach dem Abspeichern ausdünnen. Beispielsweise können nur solche Positionsdatensätze abgespeichert werden, deren Feldstärkeeintrag <S> eine vorgegebene untere Schwelle überschreitet. Alternativ oder zusätzlich können die Positionsdaten 16 in einer Ringspeicher-Datenstruktur abgelegt werden, bei der kontinuierlich alte durch neue Positionsdatensätze überschrieben werden.

In Vergleich zu einem nicht-flüchtigen EEPROM- oder Flash-Speicher eignet sich der flüchtige RAM-Speicher 15 besonders zum Abspeichern der Positionsdaten 16, da die erforderliche Energieversorgung vergleichsweise gering ist. Dies erlaubt eine Maximierung des Fernbereichs F, da ein Beschreiben des flüchtigen Speichers 15 bereits in größerer Entfernung von dem Terminal 20 möglich ist, als das Beschreiben eines nicht-flüchtigen Speichers. Auf diese Weise kann für den Fernbereich F ein Radius von mehreren Metern erreicht werden, z.B. von sechs Metern. Ein möglichst großer Fernbereich F erhöht grundsätzlich die Qualität der Auswertung, da mehr aussagekräftige Positionsdaten 16 ermittelt werden können. Außerdem ist ein Datenverlust in dem flüchtigen Speicher 15 aufgrund punktueller Versorgungslücken in dem Feld E unkritisch, da aufgrund der so entstehenden Lücke in den Positionsdaten 16 auch die zuvor gemessenen Positionsdaten 16 wertlos werden.

Der Transponder 10 tritt in Schritt S5 aus dem Fernbereich F in den Nahbereich N ein (ENTER N) und befindet sich dann an der Position (b) in Fig. 2. Die Grenze zwischen dem Fernbereich F und dem Nahbereich N und die Position (b) ist individuell abhängig von der jeweiligen lokalen Feldstärke des Feldes E, der von dem Transponder 10 benötigten Energieversorgung und der Lage und Aufbewahrung des Transponders 10 bei dessen Benutzer. Der Nahbereich N beginnt dort, wo das Feld E genügend Energie zur Verfügung stellt, um sämtliche Funktionalitäten des Transponders 10 vollständig zu gewährleisten und das Unterbrechungsrisiko vernachlässigbar geworden ist. Im Gegensatz dazu ist im Fernbereich F im Wesentlichen nur der Betrieb des Bewegungssensors 17 gewährleistet. In der Praxis kann der Nahbereich N einen Radius von 1 bis 2 Metern um das Terminal 20 bzw. dessen Antenne 25 herum besitzen.

An der Position (b) sendet die Steuereinrichtung 13 des Transponders 10 in Schritt S7 unter anderem die bis zu diesem Zeitpunkt ermittelten Positionsdaten 16 (P1) über die Antennen 11, 25 an das Terminal 20 und dessen Auswerteeinrichtung 21 (SEND/RECEIVE P1, ID, CHECKSUM). Der Sendevorgang kann durch einen elektronischen Schalter in den Transponder 10 getriggert werden, der bei Überschreiten einer vorgegebenen lokalen Feldstärke für eine gewisse Zeit, zum Beispiel für 100 ms, ein Signal oder einen Interrupt an den Prozessor 12 sendet, so dass dieser und die Steuereinrichtung 13 die erforderlichen Schritte vornehmen können.

Vorher erzeugt die Steuereinrichtung 13 zur Absicherung der Datenübertragung jedoch in Schritt S6 noch eine Prüfsumme (GEN CHECKSUM), die über die Positionsdaten P1 und eine eindeutige Kennung ID des Transponders 10 berechnet und mittels eines datenträgerindividuellen kryptographischen Schlüssels verschlüsselt wird. Die Kennung ID und die Prüfsumme werden in Schritt S7 zusammen mit den Positionsdaten P1 an das Terminal 20 übertragen. In Schritt S8 verifiziert die Auswerteeinrichtung 21 die Authentizität der empfangenen Positionsdaten P1 bzw. des Transponders 10 (VERIFY AUTH), indem anhand der Kennung ID zunächst derjenige kryptographische Schlüssel ermittelt wird, der zur Entschlüsselung der verschlüsselten Prüfsumme geeignet ist, z.B. mittels einer Anfrage an einen Hintergrundserver und entsprechender kryptographischer Absicherung des von diesem übertragenen Schlüssels. In den Schritten S6, S7, S8 kann auch auf Basis eines asymmetrischen Schlüsselpaars ein kryptographisches Verifikation durch Signieren der zu übertragenden Positionsdaten P1 mit einem geheimen Schlüssel des Transponders 10 erfolgen. In Schritt S8 kann diese Signatur durch Entschlüsseln mit dem zugehörigen öffentlichen Schlüssel des Transponders 10 verifiziert werden.

Wenn die Verifikation in Schritt S8 erfolgreich ist, gelten insbesondere die übertragenen Positionsdaten P1 und der Transponder 10 als authentisch und die Auswerteeinrichtung 21 prüft im Rahmen einer ersten Prüfung in Schritt S9 (CHECK P1), ob sich aus den Positionsdaten P1 ein Bewegungspfad (a) rekonstruieren lässt, der zeigt, dass sich der Transponder 10 tatsächlich durch den Fernbereich F hindurch in den Nahbereich N zu der Position (b) bewegt hat. Dabei werden auch lokale Feldstärkedaten entlang des Bewegungspfades (a) und Bewegungsrichtungen berücksichtigt, z.B. eine ausreichend lange Bewegung in Richtung des Terminals 20 oder das Aufheben einer Bewegung in eine Richtung durch eine Bewegung in die entgegengesetzte Richtung. Für diese Art der Prüfung in Schritt S9 und die Zuverlässigkeit der Ergebnisse ist es vorteilhaft, wenn die Größe des Fernbereichs F durch die oben geschilderten Maßnahmen maximiert wird.

Falls die Positionsdaten P1 einen Bewegungspfad mit den erforderlichen Eigenschaften abbilden, ist die Prüfung der Positionsdaten P1 in Schritt S9 erfolgreich. Falls die Positionsdaten P1 jedoch z.B. keine nennenswerte Bewegung des Transponders seit dessen Einschalten ergeben, kann sich der Transponder 10 gar nicht durch den Fernbereich F in den Nahbereich N bewegt haben und es ist von einem Relay-Angriff auszugehen. Dann wird jedwede Transaktion zwischen Transponder 10 und Terminal 20 unterbunden.

Zur Vorbereitung der Auswertung von Positionsdaten P2 im Rahmen einer zweiten Prüfung in Schritt S17 werden in Schritt S10 die Zeitdaten des Transponders 10 initialisiert (INIT T), d.h. wieder auf Null gestellt, und synchron hierzu ein Zeitzähler des Terminals 20 durch die Auswerteeinrichtung 21 gestartet (INIT T-CNTR), so dass in Schritt S11 eine zeitsynchrone Erfassung von Positionsdaten P2, P2' durch den Bewegungssensor 17 des Transponders 10 (START SENSING P2) und die Sensoreinrichtung 24 des Terminals 20 (START SENSING P2') erfolgen kann. Die Positionsdaten P2, P2' zeichnen jeweils die Bewegung des Transponders 10 von der Position (b) am äußeren Rand des Nahbereichs N zu der Position (d) unmittelbar vor dem Terminal 20 entlang des Bewegungspfades (c) auf. Hierbei kann die Auswerteeinrichtung 21 bereits während der Messung der Positionsdaten P2' mit deren Aufbereitung und Auswertung beginnen.

In Schritt S12 steht der Benutzer des Transponders 10 schließlich an der Position (d) vor dem Terminal 20 und leitet über das Tastenfeld 23 die gewünschte Transaktion ein (LAUNCH TRANSACTION). Unmittelbar danach fordert die Auswerteeinrichtung 21 in Schritt S13 die Positionsdaten P2 von dem Transponder 10 bzw. dessen Steuereinrichtung 12 an (GET P2), wobei die Positionsdaten P2, die nun den Bewegungspfad (c) rekonstruieren, in den Schritten S14 (GET CHECKSUM), S15 (SEND/RECEIVE P2, ID, CHECKSUM) und S16 (VERIFY AUTH) in der gleichen abgesicherten Weise an das Terminal 20 übertragen werden, wie zuvor die Positionsdaten P1 in den Schritten S6 bis S8.

Sofern in Schritt S16 die Authentizität der Positionsdaten P2 und des Transponders 10 bestätigt werden kann (VERIFY AUTH), wird in Schritt S17 schließlich geprüft, ob aus den zeitsynchron erfassten Positionsdaten P2 des Transponders 10 und Positionsdaten P2' des Terminals 20 ein weitgehend übereinstimmender Bewegungspfad (c) zwischen den Positionen (b) und (d) rekonstruiert werden kann (CHECK P2, P2'), wobei auch kleinere Bewegungen des Transponders 10 unmittelbar vor dem Terminal 20 berücksichtigt werden, z.B. leichtes Hin- und Hergehen oder -wippen des Benutzers. Wenn dies der Fall ist, ist auch die Prüfung der Positionsdaten P2 erfolgreich abgeschlossen. Andernfalls wird jedwede Transaktion zwischen dem Transponder 10 und dem Terminal 20 unterbunden bzw. verhindert.

Sofern sowohl die Prüfung der Positionsdaten P1 in Schritt S9 als auch die Prüfung der Positionsdaten P2 in Schritt S17 erfolgreich verlaufen sind, kann in Schritt S18 schließlich die in Schritt S12 eingeleitete Transaktion freigegeben (ALLOW TRANSACTION) und von der Transaktionseinrichtung 22 ausgeführt werden. Nach der erfolgreich durchgeführten Transaktion verlässt der Benutzer mit dem Transponder 10 schließlich die Position (d) und entfernt sich gemäß dem Bewegungspfad (e) von dem Terminal 20.

Bei dem erläuterten Verfahren kann die Reihenfolge der Schritte S1 bis S18 beliebig verändert werden, soweit dies der ordnungsgemäßen Ausführung des Verfahrens nicht entgegensteht. Zum Beispiel können in den Schritten S7 und S15 einerseits die Positionsdaten P1/P2 und die Kennung ID und andererseits die Prüfsumme getrennt übertragen werden, zum Beispiel wenn die Berechnung der Prüfsumme in den Schritten S6 oder S14 erst nach Übertragung der Positionsdaten P1/P2 an das Terminal 20 ausgeführt werden soll.

Ebenso ist es möglich, jeweils nur eine der beiden Prüfungen (Schritte S9 und S17) durchzuführen und als ausreichend für die Abarbeitung einer Transaktion anzusehen. Zum Beispiel kann auf die Prüfung der Positionsdaten P1 gemäß Schritt S9 verzichtet werden und nur die Prüfung der Positionsdaten P2 gemäß Schritt S17 erfolgen, wenn bei der Aufzeichnung des Bewegungspfads (c) ausreichend differenzierte Positionsdaten P2 ermittelt werden konnten. Daneben können die Ergebnisse der Prüfschritte S9 und S17 auch nach vorgegebenen Kriterien gewichtet werden, z.B. abhängig von der Qualität der Positionsdaten P1 und P2/P2' oder der Topologie und Größe des Nahbereichs N und Fernbereichs F.

Auch kann die Sensoreinrichtung 24 bereits im Zusammenhang mit der Prüfung gemäß Schritt S9 zum Einsatz kommen, z.B. indem sie Positionsdaten P1' über den Bewegungspfad (a) in dem Fernbereich F aufzeichnet und in der im Zusammenhang mit Schritt S17 geschilderten Weise verarbeitet. Dazu kann die Sensoreinrichtung 24 beispielsweise hoch auf dem Terminal 20 montiert sein und eine ausreichend hohe Auflösung besitzen.

Abweichend von der gebündelten Übertragen der Positionsdaten P1, P2 an den Positionen (b) und (d) ist es auch möglich, die Positionsdaten P1, P2 kontinuierlich von dem Transponder 10 an das Terminal 20 zu übertragen, was insbesondere im Nahbereich N aufgrund dessen ausreichender Energieversorgung möglich ist.

## Patentansprüche

1. Verfahren zum Absichern einer von einem portablen Datenträger (10) auf einem Transaktionsendgerät (20) eingeleiteten Transaktion mittels Drahtlos-Kommunikation, **dadurch gekennzeichnet, dass**
der Datenträger Positionsdaten (16; P1; P2) aufzeichnet (S3; S11), welche Bewegungsdaten umfassen, die Bewegungen des Datenträgers (10) in einem von dem Transaktionsendgerät (20) bereitgestellten Drahtlos-Kommunikationsfeld (E) wiedergeben, wobei
das Transaktionsendgerät (20) eine eingeleitete Transaktion nur ausführt (S18), wenn das Transaktionsendgerät (20) durch Auswerten der Positionsdaten feststellt (S9; S17), dass sich der Datenträger (10) in einem Nahbereich (N) des Drahtlos-Kommunikationsfeldes (E) befindet.

2. Verfahren nach Anspruch 1, **dadurch gekennzeichnet, dass**
der Datenträger (10) Positionsdaten (16; P1; P2) aufzeichnet (S3; S11), welche auch Feldstärkedaten umfassen, die lokale Feldstärken des Kommunikationsfeldes (E) wiedergeben, sowie Zeitdaten umfassen, über welche die Bewegungsdaten und Feldstärkedaten zeitlich verknüpft werden, wobei
das Transaktionsendgerät (20) die Bewegungsdaten und die Feldstärkedaten auswertet (S9; S17), um festzustellen, ob sich der Datenträger (10) im Nahbereich (N) des Kommunikationsfeldes (E) befindet.

3. Verfahren nach Anspruch 1 oder 2, **dadurch gekennzeichnet, dass** außerhalb des Nahbereichs (N) des Kommunikationsfeldes (E) zwischen dem Datenträger (10) und dem Transaktionsendgerät (20) keine Drahtlos-Kommunikation stattfindet und der Datenträger (10) ein Eintreten in den Nahbereich (N) des Kommunikationsfeldes (E) daran erkennt (S5), dass die Feldstärkedaten eine vorgegebene Grenzfeldstärke überschreiten, welche ausreicht, um eine vollständige Funktionalität des Datenträgers (10) sicherzustellen.

4. Verfahren nach Anspruch 3, **dadurch gekennzeichnet, dass** das Transaktionsendgerät (20) die Transaktion nur ausführt (S18), wenn es beim Auswerten der Positionsdaten (16; P1) feststellt (S9), dass sich der Datenträger (10) durch einen sich von dem Nahbereich (N) unterscheidenden Fernbereich (F) des Kommunikationsfeldes (E) hindurch in den sich unmittelbar um das Transaktionsendgerät (20) herum ersteckenden Nahbereich (N) bewegt hat (S5) und/oder dass sich der Datenträger (10) innerhalb des Nahbereichs (N) befindet.

5. Verfahren nach Anspruch 3 oder 4, **dadurch gekennzeichnet, dass** das Transaktionsendgerät (20) beim Auswerten (S9; S16) der Positionsdaten (16; P1; P2) eine Bewegungsbahn (a, c) des Datenträgers (10) durch das Kommunikationsfeld (E) anhand von aus den Bewegungsdaten ableitbaren Bewegungsrichtungen rekonstruiert.

6. Verfahren nach Anspruch 2 und einem der Ansprüche 3 bis 5, **dadurch gekennzeichnet, dass** beim Eintreten (S5) des Datenträgers (10) in den Nahbereich (N) des Kommunikationsfeldes (E) der Datenträger (10) die Zeitdaten und das Transaktionsendgerät (20) einen Zeitzähler derart initialisiert (S10), dass der Zeitzähler synchron zu den von dem Datenträger (10) aufgezeichneten Zeitdaten betrieben wird und den Bewegungsdaten zugeordnet werden kann.

7. Verfahren nach Anspruch 6, **dadurch gekennzeichnet, dass** das Transaktionsendgerät (20)
Bewegungsdaten aufzeichnet (S11), welche Bewegungen des Datenträgers (10) in dem Nahbereich (N) des Kommunikationsfelds (E) wiedergeben;
zumindest die von dem Datenträger (10) aufgezeichneten Positionsdaten (16; P2) bei dem Datenträger anfordert (S13);
die aufgezeichneten Bewegungsdaten mit den von dem Datenträger (10) aufgezeichneten Positionsdaten (16; P2) vergleicht (S17); und
die Transaktion nur ausführt (S18), wenn sich die aus den von dem Transaktionsendgerät (20) und von dem Datenträger (10) aufgezeichneten Bewegungsdaten ergebenden Bewegungspfade (c) des Datenträgers (10) in dem Nahbereich (N) des Kommunikationsfelds (E) im Wesentlichen übereinstimmen.

8. Verfahren nach Anspruch 3 oder 7, **dadurch gekennzeichnet, dass** der Datenträger (10) beim Eintreten (S5) in den Nahbereich (N) des Kommunikationsfeldes (E) oder auf Anforderung (S13) durch das Transaktionsendgerät (20) zumindest eine individuelle Kennung (ID) und die Positionsdaten (16; P1; P2) drahtlos an das Transaktionsendgerät (20) überträgt (S7; S15).

9. Verfahren nach Anspruch 8, **dadurch gekennzeichnet, dass**
der Datenträger (10) eine mit einem datenträgerindividuellen Schlüssel verschlüsselte Prüfsumme über die Kennung (ID) und die Positionsdaten (16; P1; P2) erzeugt (S6; S14) und drahtlos an das Endgerät überträgt (S7; S15) und
das Transaktionsendgerät (20) die Authentizität des Datenträgers (10) oder der Positionsdaten (16; P1, P2) prüft (S8; S16), indem die verschlüsselte Prüfsumme und Kennung (ID) entschlüsselt werden und mit der empfangenen Kennung (ID) und Prüfsumme verglichen werden.

10. Verfahren nach einem der Ansprüche 1 bis 9, **dadurch gekennzeichnet, dass** zumindest die Bewegungsdaten in einem flüchtigen Speicher (15) des Datenträgers (10) gespeichert werden (S4).

11. Transaktionsendgerät (20), umfassend eine Drahtlos-Kommunikationsschnittstelle (25), über die ein Drahtlos-Kommunikationsfeld (E) bereitgestellt wird und ein mit dem Transaktionsendgerät (20) in Drahtlos-Kommunikation stehender Datenträger (10) eine Transaktion einleiten kann, welche von einer Transaktionseinrichtung (22) des Transaktionsendgeräts (20) ausgeführt werden kann, **dadurch gekennzeichnet, dass** das Transaktionsendgerät (20) eine Auswerteeinrichtung (21) umfasst, die über die Drahtlos-Kommunikationsschnittstelle (25) Positionsdaten (16; P1; P2) von dem Datenträger (10) empfängt, welche zumindest Bewegungsdaten, welche Bewegungen des Datenträgers (10) in dem Kommunikationsfeld (E) wiedergeben, und Feldstärkedaten umfassen, welche von dem Datenträger (10) aufgezeichnete lokale Feldstärken wiedergeben, und die eine Ausführung einer von dem Datenträger (10) eingeleiteten Transaktion durch die Transaktionseinrichtung (22) nur zulässt, wenn bei einer Auswertung der Positionsdaten (16; P1, P2) festgestellt wird, dass sich der Datenträger (10) in einem Nahbereich (N) des Kommunikationsfeldes (E) befindet.

12. Portabler Datenträger (10), umfassend einem Prozessor (12), eine Steuereinrichtung (13), zumindest einen flüchtigen Speicher (15) und eine Drahtlos-Kommunikationsschnittstelle (11) über die die Steuereinrichtung (13) eine Transaktion auf einem Transaktionsendgerät (20) einleiten kann, mit dem der Datenträger (10) in Drahtlos-Kommunikation steht, **dadurch gekennzeichnet, dass** der Datenträger (10) Positionsdaten (16; P1; P2) aufzeichnet, welche von einem Bewegungssensor (17) aufgezeichnete Bewegungsdaten umfassen, welche Bewegungen des Datenträgers (10) in dem Kommunikationsfeld (E) wiedergeben, und über die Drahtlos-Schnittstelle (11) ermittelte Feldstärkedaten umfassen, welche lokale Feldstärken eines von dem Transaktionsendgerät (20) bereitgestellten Drahtlos-Kommunikationsfeldes (E) wiedergeben, und die Steuereinrichtung (13) eingerichtet ist, über die Drahtlos-Kommunikationsschnittstelle (11) festzustellen, ob sich der Datenträger (10) in einem Nahbereich (N) des Kommunikationsfelds (E) befindet und die Positionsdaten an das Transaktionsendgerät (20) zu übertragen, wenn sich der Datenträger (10) in dem Nahbereich (N) befindet.

13. Portabler Datenträger (10) nach Anspruch 12, **dadurch gekennzeichnet, dass** der Datenträger (10) einen RFID-Transponder umfasst und durch eine Chipkarte, eine Zugangseinheit, eine Identifikationseinheit, einen Autoschlüssel oder einen sonstigen Datenträger gebildet wird, welcher über ein von dem Transaktionsendgerät (20) bereitgestelltes Drahtlos-Kommunikationsfeld (E) eine Transaktion auf dem Transaktionsendgerät (20) einleiten kann.

14. Portabler Datenträger (10) nach Anspruch 12 oder 13, **dadurch gekennzeichnet, dass** der Datenträger (10) eingerichtet und ausgestaltet ist, in Wechselwirkung mit einem Transaktionsendgerät (20) nach Anspruch 11 ein Verfahren nach einem der Ansprüche 1 bis 10 auszuführen.

15. Transaktionssystem (10, 20), umfassend einen portablen Datenträger (10) nach einem der Ansprüche 12 bis 14 und ein Transaktionsendgerät (20) nach Anspruch 11, welches eingerichtet und ausgestaltet ist, in Wechselwirkung mit dem Datenträger (10) ein Verfahren nach einem der Ansprüche 1 bis 10 auszuführen.

## Claims

1. A method for securing a transaction by means of wireless communication initiated by a portable data carrier (10) on a transaction terminal (20), **characterized in that**
the data carrier records (S3; S11) position data (16; P1; P2) comprising movement data reproducing movements of the data carrier (10) in a wireless communication field (E) made available by the transaction terminal (20), wherein
the transaction terminal (20) executes (S 18) an initiated transaction only when the transaction terminal (20) determines (S9; S 17) by evaluating the position data that the data carrier (10) is disposed in a near zone (N) of the wireless communication field (E).

2. The method according to claim 1, **characterized in that**
the data carrier (10) records (S3; S11) position data (16; P1; P2) also comprising field strength data reproducing the local field strengths of the communication field (E), and also comprising time data via which the movement data and the field strength data are temporally linked, wherein
the transaction terminal (20) evaluates (S9; S 17) the movement data and the field strength data to determine whether the data carrier (10) is disposed in the near zone (N) of the communication field (E).

3. The method according to claim 1 or 2, **characterized in that** outside of the near zone (N) of the communication field (E) no wireless communication takes place between the data carrier (10) and the transaction terminal (20), and the data carrier (10) recognizes an entry into the near zone (N) of the communication field (E) by the field strength data exceeding a predetermined threshold field strength that is sufficient to ensure a complete functionality of the data carrier (10).

4. The method according to claim 3, **characterized in that** the transaction terminal (20) executes (S 18) the transaction only when it determines (S9), upon evaluating the position data (16; P1), that the data carrier (10) has moved (S5) into the near zone (N) extending directly around the transaction terminal (20) through a far zone (F) of the communication field (E) that differs from the near zone (N), and/or that the data carrier (10) is disposed within the near zone (N).

5. The method according to claim 3 or 4, **characterized in that** the transaction terminal (20) reconstructs, upon evaluating (S9; S 16) the position data (16; P1; P2), a movement path (a, c) of the data carrier (10) through the communication field (E) on the basis of the movement directions derivable from the movement data.

6. The method according to claim 2 and any of the claims 3 to 5, **characterized in that**, upon entry (S5) of the data carrier (10) into the near zone (N) of the communication field (E), the data carrier (10) so initializes (S10) the time data and the transaction terminal (20) so initializes a time counter that the time counter is run synchronously to the time data recorded by the data carrier (10) and can be allocated to the movement data.

7. The method according to claim 6, **characterized in that** the transaction terminal (20)
records (S11) movement data reproducing movements of the data carrier (10) in the near zone (N) of the communication field (E);
requests (S13) from the data carrier at least the position data (16; P2) recorded by the data carrier (10);
compares (S17) the recorded movement data with the position data (16; P2) recorded by the data carrier (10); and
executes (S18) the transaction only when the movement paths (c) of the data carrier (10) in the near zone (N) of the communication field (E) that result from the movement data recorded by the transaction terminal (20) and by the data carrier (10) match substantially.

8. The method according to claim 3 or 7, **characterized in that**, upon entering (S5) the near zone (N) of the communication field (E) or upon request (S 13) by the transaction terminal (20), the data carrier (10) transmits (S7; S15) in wireless fashion at least an individual identification (ID) and the position data (16; P1; P2) to the transaction terminal (20).

9. The method according to claim 8, **characterized in that**
the data carrier (10) generates (S6; S14) a checksum over the identification (ID) and the position data (16; P1; P2), the checksum being encrypted with a data-carrier individual key, and transmits (S7; S15) said checksum in wireless fashion to the terminal and
the terminal (20) checks (S8; S16) the authenticity of the data carrier (10) or of the position data (16; P1; P2) by decrypting the encrypted checksum and identification (DI) and comparing them with the received identification (ID) and checksum.

10. The method according to any of the claims 1 to 9, **characterized in that** at least the movement data are stored (S4) in a volatile memory (15) of the data carrier (10).

11. A transaction terminal (20), comprising a wireless communication interface (25) via which a wireless communication field (E) is made available, and a data carrier (10) that communicates with the transaction terminal (20) in wireless fashion can initiate a transaction that can be executed by a transaction device (22) of the transaction terminal (20), **characterized in that** the transaction terminal (20) comprises an evaluation device (21) that receives position data (16; P1; P2) from the data carrier (10) via the wireless communication interface (25), said position data comprising at least movement data reproducing movements of the data carrier (10) in the communication field (E), and comprising field strength data reproducing local field strengths recorded by the data carrier (10), and which permits an execution of a transaction initiated by the data carrier (10) through the transaction device (22) only when it is determined upon an evaluation of the position data (16; P1, P2) that the data carrier (10) is disposed in a near zone (N) of the communication field (E).

12. A portable data carrier (10) comprising a processor (12), a control device (13), at least one volatile memory (15) and a wireless communication interface (11) via which the control device (13) can initiate a transaction on a transaction terminal (20) with which the data carrier (10) communicates in wireless fashion, **characterized in that** the data carrier (10) records position data (16; P1; P2) comprising movement data recorded by a motion sensor (17), said movement data reproducing movements of the data carrier (10) in the communication field (E), and comprising field strength data detected via the wireless interface (11), said field strength data reproducing local field strengths of a wireless communication field (E) made available by the transaction terminal (20), and the control device (13) is adapted to determine via the wireless communication interface (11) whether the data carrier (10) is disposed in a near zone (N) of the communication field (E) and to transmit the position data to the transaction terminal (20) when the data carrier (10) is disposed in the near zone (N).

13. The portable data carrier (10) according to claim 12, **characterized in that** the data carrier (10) comprises an RFID transponder and is formed by a chip card, an access unit, an identification unit, a car key or other data carrier that can initiate a transaction on the transaction terminal (20) via a wireless communication field (E) made available by the transaction terminal (20).

14. The portable data carrier (10) according to claim 12 or 13, **characterized in that** the data carrier (10) is adapted and configured to execute a method according to any of the claims 1 to 10 in interaction with a transaction terminal (20) according to claim 11.

15. A transaction system (10, 20) comprising a portable data carrier (10) according to any of the claims 12 to 14 and a transaction terminal (20) according to claim 11, which is adapted and configured to execute a method according to any of the claims 1 to 10 in interaction with the data carrier (10).

## Revendications

1. Procédé destiné à sécuriser une transaction engagée par un support de données portable (10) sur un terminal de transaction (20) par communication sans fil, **caractérisé en ce que**
le support de données enregistre (S3; S11) des données de position (16; P1; P2) qui comprennent des données de déplacement qui reproduisent des déplacements du support de données (10) dans un champ de communication sans fil (E) mis à disposition par le terminal de transaction (20)
le terminal de transaction (20) n'exécute (S18) une transaction engagée que quand le terminal de transaction (20) constate (S9; S17), en évaluant les données de position, que le support de données (10) se trouve dans une zone proche (N) du champ de communication sans fil (E).

2. Procédé selon la revendication 1, **caractérisé en ce que**
le support de données (10) enregistre (S3; S11) des données de position (16; P1; P2), lesquelles comprennent aussi des données d'intensité de champ reproduisant les intensités de champ locales du champ de communication (E) et comprennent des données de temps par l'intermédiaire desquelles les données de déplacement et données d'intensité de champ sont combinées dans le temps,
le terminal de transaction (20) évalue (S9; S17) les données de déplacement et les données d'intensité de champ pour constater si le support de données (10) se trouve dans la zone proche (N) du champ de communication (E).

3. Procédé selon la revendication 1 ou 2, **caractérisé en ce que**, en dehors de la zone proche (N) du champ de communication (E), aucune communication sans fil entre le support de données (10) et le terminal de transaction (20) n'a lieu et le support de données (10) reconnaît (S5) une entrée dans la zone proche (N) du champ de communication (E) au fait que les données d'intensité de champ dépassent une intensité de champ limite donnée qui suffit pour assurer une fonctionnalité complète du support de données (10).

4. Procédé selon la revendication 3, **caractérisé en ce que** le terminal de transaction (20) n'exécute (S18) la transaction que quand il constate (S9) lors de l'évaluation des données de position (16; P1) que le support de données (10) s'est déplacé (S5) à travers un zone éloignée (F) du champ de communication (E) différente de la zone proche (N) de manière à se retrouver dans la zone proche (N) s'étendant directement autour du terminal de transaction (20) et/ou que le support de données (10) se trouve à l'intérieur de la zone proche (N).

5. Procédé selon la revendication 3 ou 4, **caractérisé en ce que**, lors de l'évaluation (S9; S16) des données de position (16; P1; P2), le terminal de transaction (20) reconstitue une trajectoire de déplacement (a, c) du support de données (10) à travers le champ de communication (E) au moyen de directions de déplacement pouvant être déduites à partir des données de déplacement.

6. Procédé selon la revendication 2 et une des revendications de 3 à 5, **caractérisé en ce que**, lors de l'entrée (S5) du support de données (10) dans la zone proche (N) du champ de communication (E), une initialisation (S10) des données de temps par le support de données (10) et d'un compteur de temps par le terminal de transaction (20) est effectuée de telle sorte que le compteur de temps est exploité en synchronisation avec les données de temps enregistrées par le support de données (10) et peut être associé aux données de déplacement.

7. Procédé selon la revendication 6, **caractérisé en ce que** le terminal de transaction (20)
enregistre (S11) des données de déplacement qui reproduisent des déplacements du support de données (10) dans la zone proche (N) du champ de communication (E);
demande (S13) au support de données au moins les données de position (16; P2) enregistrées par le support de données (10);
compare (S17) les données de déplacement enregistrées avec les données de position (16; P2) enregistrées par le support de données (10); et
n'exécute (S18) la transaction que si les chemins de déplacement (c) du support de données (10) découlant des données de déplacement enregistrées par le terminal de transaction (20) et par le support de données (10) coïncident essentiellement dans la zone proche (N) du champ de communication (E).

8. Procédé selon la revendication 3 ou 7, **caractérisé en ce que**, lors de l'entrée (S5) dans la zone proche (N) du champ de communication (E) ou à la demande (S13) du terminal de transaction (20), le support de données (10) transmet (S7; S15) sans fil au au moins un identificateur individuel (ID) et les données de position (16; P1; P2).

9. Procédé selon la revendication 8, **caractérisé en ce que**
le support de données (10) génère (S6; S14) et transmet (S7; S15) sans fil au terminal de transaction une somme de contrôle concernant l'identificateur (ID) et les données de position (16; P1; P2) chiffrée avec une clé individuelle au support de données et
le terminal de transaction (20) contrôle (S8; S16) l'authenticité du support de données (10) ou des données de position (16; P1, P2), ce qui a lieu **en ce que** la somme de contrôle et l'identificateur (ID) chiffrés sont déchiffrés et comparés avec l'identificateur (ID) et la somme de contrôle reçus.

10. Procédé selon une des revendications de 1 à 9, **caractérisé en ce qu'**au moins les données de déplacement sont mémorisées (S4) dans une mémoire volatile (15) du support de données (10).

11. Terminal de transaction (20), comprenant une interface de communication sans fil (25) par l'intermédiaire de laquelle un champ de communication sans fil (E) est mis à disposition et un support de données (10) en communication sans fil avec le terminal de transaction (20) peut engager une transaction pouvant être exécutée par un dispositif de transaction (22) du terminal de transaction (20), **caractérisé en ce que** le terminal de transaction (20) comprend un dispositif d'évaluation (21) qui reçoit de la part du support de données (10), par l'intermédiaire de l'interface de communication sans fil (25), des données de position (16; P1; P2), lesquelles comprennent au moins des données de déplacement reproduisant des déplacements du support de données (10) dans le champ de communication (E) et des données d'intensité de champ reproduisant des intensités de champ locales enregistrées par le support de données (10), et qui n'autorise une exécution par le dispositif de transaction (22) d'une transaction engagée par le support de données (10) que quand, lors d'une évaluation des données de position (16; P1, P2), il est constaté que le support de données (10) se trouve dans une zone proche (N) du champ de communication (E).

12. Support de données portable (10), comprenant un processeur (12), un dispositif de commande (13), au moins une mémoire volatile (15) et une interface de communication sans fil (11) par l'intermédiaire de laquelle le dispositif de commande (13) peut engager une transaction sur un terminal de transaction (20) avec lequel le support de données (10) est en communication sans fil, **caractérisé en ce que** le support de données (10) enregistre des données de position (16; P1; P2), lesquelles comprennent des données de déplacement enregistrées par un capteur de déplacement (17) qui reproduisent des déplacements du support de données (10) dans le champ de communication (E), et comprennent des données d'intensité de champ déterminées par l'intermédiaire de l'interface sans fil (11) qui reproduisent des intensités de champ locales d'un champ de communication sans fil (E) mis à disposition par le terminal de transaction (20), et **en ce que** le dispositif de commande (13) est configuré pour constater par l'intermédiaire de l'interface de communication sans fil (11) si le support de données (10) se trouve dans une zone proche (N) du champ de communication (E) et pour transmettre au terminal de transaction (20) les données de position quand le support de données (10) se trouve dans la zone proche (N).

13. Support de données portable (10) selon la revendication 12, **caractérisé en ce que** le support de données (10) comprend un transpondeur RFID et est constitué d'une carte à puce, d'une unité d'accès, d'une unité d'identification, d'une clé de voiture ou d'un autre support de données qui peut engager une transaction sur le terminal de transaction (20) par l'intermédiaire d'un champ de communication sans fil (E) mis à disposition par le terminal de transaction (20).

14. Support de données portable (10) selon la revendication 12 ou 13, **caractérisé en ce que** le support de données (10) est configuré et conçu pour exécuter en interaction avec un terminal de transaction (20) selon la revendication 11 un procédé selon une des revendications de 1 à 10.

15. Système de transaction (10, 20), comprenant un support de données portable (10) selon une des revendications de 12 à 14 et un terminal de transaction (20) selon la revendication 11 qui est configuré et conçu pour exécuter en interaction avec le support de données (10) un procédé selon une des revendications de 1 à 10.
